# EUROPÄISCHE PATENTANMELDUNG

(11) **EP 2 186 597 A1**
(43) Veröffentlichungstag der Anmeldung: **19.05.2010**
(21) Anmeldenummer: 09166422.7
(22) Anmeldetag: 27.07.2009
(51) Int. Cl.: B23K 37/04

(54) **Antriebseinheit**

(30) Priorität: 13.11.2008 DE 202008015081 U
(71) Anmelder: Staudinger, Karl, 86316 Friedberg (DE)
(72) Erfinder: Staudinger, Karl, 86316 Friedberg (DE)
(74) Vertreter: Charrier, Rapp & Liebau

(57) **Zusammenfassung**

Die Erfindung betrifft eine Antriebseinheit mit einem motorisch drehbaren Antriebsritzel (3) und einem um eine Mittelachse (6) drehbaren oder verschiebbaren Abtriebselement (5), wobei das Antriebsritzel (3) eine Verzahnung (7) zum Eingriff mit einer entsprechenden Gegenverzahnung (8) des Abtriebselements (5) enthält. Um eine verschleißarme und dennoch genaue Positionierung des Abtriebselements zu ermöglichen, ist dem Antriebsritzel (3) ein pneumatisch, hydraulisch oder elektrisch ansteuerbares Stellelement (14) zugeordnet, durch welches das Antriebsritzel (3) gesteuert gegen das Abtriebselement (5) anstellbar ist.

## Beschreibung

Die Erfindung betrifft eine Antriebseinheit mit einem motorisch drehbaren Antriebsritzel und einem um eine Mittelachse drehbaren oder verschiebbaren Abtriebselement, wobei das Antriebsritzel eine Verzahnung zum Eingriff mit einer entsprechenden Gegenverzahnung des Abtriebselements enthält.

Derartige Antriebseinheiten werden z.B. zur Bewegung und Positionierung von drehbaren oder verschiebbaren Arbeitstischen in Schweiß- oder Montagezellen eingesetzt. Vielfach werden dabei die innerhalb eines Gehäuses entweder drehbar gelagerten oder verschiebbar geführten Arbeitstische mit Hilfe eines Drehkranzes bzw. einer Zahnstange angetrieben, die mit einem motorisch angetriebenen Antriebsritzel in Eingriff stehen. Ein Problem derartiger Antriebseinheiten besteht in dem zwischen der Verzahnung des Antriebsritzels und der Gegenverzahnung des Abtriebselements üblicherweise vorhandenen Spiel, das besonders bei großen Antrieben und entsprechend groß dimensionierten Verzahnungen zu Ungenauigkeiten bei der Positionierung führen kann. Um das Spiel zwischen den Verzahnungen zu verringern, werden die Antriebsritzel daher z.B. durch Federn ständig gegen die Abtriebselemente vorgespannt. Dies hat allerdings den Nachteil, dass dadurch auch während des Antriebs die Reibung zwischen den in Eingriff stehenden Verzahnungen vergrößert wird, was auf die Dauer zu einem erhöhten Verschleiß führt.

Aufgabe der Erfindung ist es, eine Antriebseinheit der eingangs genannten Art zu schaffen, die eine verschleißarme und dennoch genaue Positionierung des Abtriebselements ermöglicht.

Diese Aufgabe wird durch eine Antriebseinheit mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Antriebseinheit ist dem Antriebsritzel ein pneumatisch, hydraulisch oder elektrisch ansteuerbares Stellelement zugeordnet, durch welches das Antriebsritzel gesteuert gegen das Abtriebselement anstellbar ist. Die Verzahnung des Antriebsritzels kann so z.B. nach Erreichen einer gewünschten Position des Abtriebselements in die Gegenverzahnung des Abtriebselements hineingedrückt werden, wodurch das Zahnflankenspiel reduziert und die Positionsgenauigkeit verbessert werden kann. Anstelle eines konstanten Anpressdrucks kann der Anpressdruck des Antriebsritzels bei der Bewegung des Abtriebselements so z.B. bei einem pneumatisch ansteuerbaren Stellelement auf 2 bar reduziert werden, wodurch die Reibung und der dadurch bedingte Verschleiß verringert werden können. Erst nach Erreichen der Position wird der Anpressdruck dann z.B. auf 5 bar erhöht und somit das Zahnflankenspiel herausgedrückt. Dadurch ist eine genaue Positionierung und sichere Arretierung des Abtriebselements auch unter hohen Belastungen erreichbar.

In einer möglichen Ausführungsform kann das Antriebsritzel zur gesteuerten Anstellung gegen das Abtriebselement auf einer verschwenkbar gelagerten Trägerplatte angeordnet sein. Bei der Ausführung des Abtriebselements als ein um eine Mittelachse drehbarer Zahnkranz ist die Trägerplatte innerhalb des Drehkranzes zweckmäßigerweise um einen zu dessen Mittelachse seitlich versetzten Lagerbolzen verschwenkbar. Durch ein gesteuertes Verschwenken der Trägerplatte mit Hilfe des Stellantriebs kann so das Antriebsritzel aus einer zurückgezogen Drehstellung in eine gegen das Abtriebselement angestellte Haltestellung bewegt werden. Zur zusätzlichen Sicherung der Trägerscheibe gegen unerwünschtes Verkippen kann die Trägerscheibe ferner durch zusätzliche Führungsbolzen und Anlaufscheiben gegen Abheben gesichert sein. Im Unterschied zum Lagerbolzen weisen die Führungsbolzen jedoch gegenüber der Trägerscheibe ein vorgegebenes Spiel auf. Der Verschwenkbereich der Trägerplatte ist in zweckmäßiger Weise durch einen Stellexzenter oder dgl. einstellbar.

In einer weiteren Ausführungsform kann das Antriebsritzel zur gesteuerten Anstellung gegen das Abtriebselement aber auch auf einem relativ zum Abtriebselement linear verschiebbaren Träger angeordnet sein. Dieser Träger kann zweckmäßiger über Linearführungen verschiebbar an oder innerhalb eines Gehäuses geführt sein.

In einer besonders zweckmäßigen Ausführung ist das Stellelement als pneumatisch betätigter Balg oder Membranzylinder ausgeführt. Durch einen derartigen Balg sind relativ große Kräfte bei kurzem Hub erreichbar. Außerdem ist ein Balg wartungsfrei und ermöglicht auch ohne aufwändige Anlenkungen einen gewissen Achs- und Winkelversatz, wodurch der Aufbau und die Montage der Antriebeinheit vereinfacht werden. Das Stellelement kann aber auch als hydraulisch oder pneumatisch betätigter Kolben, als elektrisch betätigter Stellantrieb oder dgl. ausgeführt sein.

In einer möglichen Ausführungsvariante ist das Abtriebselement als Drehkranz z.B. zum Antrieb eines Drehtisches oder dgl. ausgeführt. Das Abtriebselement kann im Falle eines Linearantriebs aber auch als Zahnstange ausgeführt sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1:**: ein erstes Ausführungsbeispiel einer Antriebseinheit für einen Drehtisch in einer Perspektivansicht;
- **Figur 2:**: eine Schnittansicht der Antriebseinheit von Figur 1,
- **Figur 3:**: eine Draufsicht der Antriebseinheit von Figur 1,
- **Figur 4:**: ein zweites Ausführungsbeispiel einer Antriebseinheit für einen Drehtisch in einer Perspektivansicht und
- **Figur 5:**: eine Draufsicht der Antriebseinheit von Figur 2.

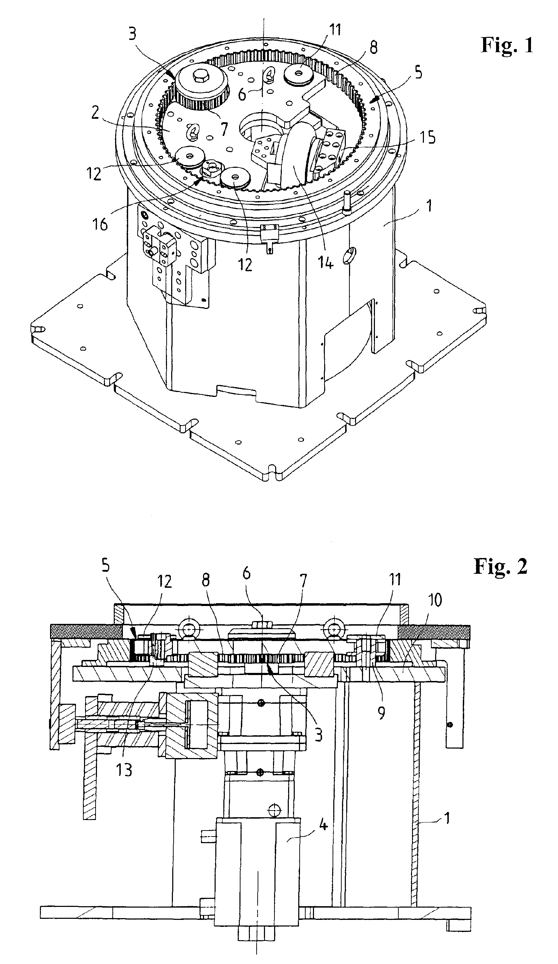

Die in den Figuren 1 bis 3 in unterschiedlichen Ansichten dargestellte Antriebseinheit ist zur Drehung und genauen Positionierung eines relativ großen und schwergewichtigen Drehtisches konzipiert, der z.B. in Schweiß- und Montagezellen zur Bearbeitung eines oder mehrerer in unterschiedlichen Stellungen positionierbarer Werkstücke eingesetzt wird. Die Antriebseinheit enthält ein innerhalb eines Gehäuses 1 an einer Trägerplatte 2 drehbar gelagertes Antriebsritzel 3, das durch einen in Figur 2 dargestellten Motor 4 rotatorisch angetrieben werden kann. Das Antriebsritzel 3 steht in Eingriff mit einem Abtriebselement 5, das beim gezeigten Ausführungsbeispiel als ein innerhalb des Gehäuses 1 um eine Mittelachse 6 drehbar gelagerter Drehkranz ausgeführt ist. Das Antriebritzel 3 weist hierzu eine Verzahnung 7 zum Eingriff mit einer als Innenverzahnung ausgeführten Gegenverzahnung 8 des hier als Drehkranz ausgebildeten Abtriebselements 5 auf.

Die in Form einer Halbscheibe ausgeführte Trägerplatte 2 mit dem daran gelagerten Antriebsritzel 3 und dem nach unten ragenden Motor 4 ist innerhalb des als Drehkranz ausgeführten Abtriebselements 5 um einen in Figur 2 dargestellten, zur Mittelachse 6 seitlich versetzten Lagerbolzen 9 verschwenkbar angeordnet. Der Lagerbolzen 9 ist hierzu auf einer oberen Grundplatte 10 des Gehäuses 1 seitlich zur Mittelachse 6 versetzt montiert. Die Trägerplatte 2 sitzt über eine entsprechend genaue Lagerbohrung auf dem nach oben ragenden Lagerbolzen 9 und wird durch eine auf dem Lagerbolzen 9 befestigte Abdeckscheibe 11 nach oben gesichert. Zur Vermeidung unerwünschter Kippbewegungen wird die Trägerplatte 2 auf der dem Lagerbolzen 9 gegenüber liegenden Seite durch zwei auf der oberen Grundplatte 10 angeordnete und mit oberen Anlaufscheiben 12 versehene Führungsbolzen 13 zusätzlich nach oben gesichert. Im Unterschied zum Lagerbolzen 9 weisen die Führungsbolzen 13 jedoch gegenüber den entsprechenden Bohrungen in der Trägerplatte 2 ein vorgegebenes seitliches Spiel auf, so dass die Trägerplatte 2 zum Andrücken der Verzahnung 7 des Antriebsritzels 3 gegen die Gegenverzahnung 8 des Abtriebselements 5 um den Lagerbolzen verschwenkt werden kann. Dadurch kann das Spiel zwischen der Verzahnung 7 des Antriebsritzels 3 und der Gegenverzahnung 8 des Abtriebselements 5 für die genaue Positionierung reduziert werden.

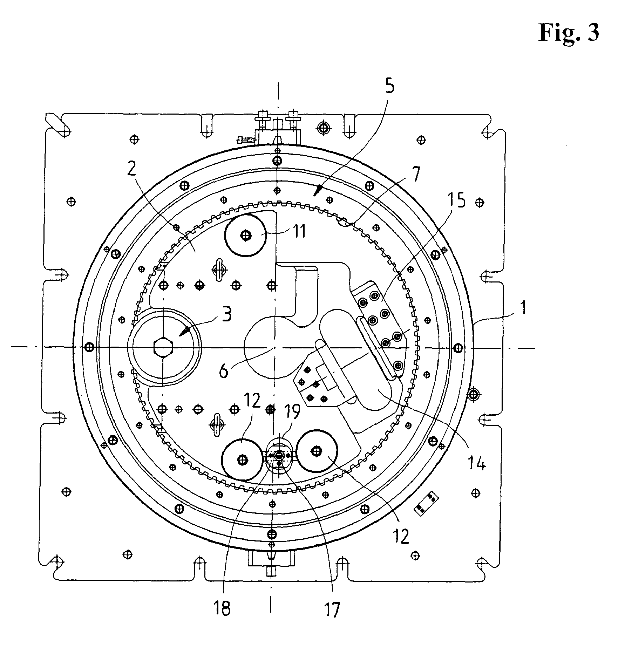

Das Verschwenken der Trägerplatte 2 zum Eindrücken der am Antriebsritzel 3 vorgesehenen Verzahnung 7 in die Gegenverzahnung 8 am Abtriebelement 5 erfolgt durch einen in den Figuren 1 und 3 erkennbaren Stellantrieb 14, der beim gezeigten Ausführungsbeispiel als ein zwischen der Trägerplatte 2 und einem ortsfesten Widerlager 15 eingespannter, pneumatisch betätigter Balg ausgebildet ist. Durch entsprechende Beaufschlagung dieses Stellantriebs 14 kann die Trägerplatte 2 zum Eindrücken der Verzahnung 7 des Antriebsritzels 3 in die Gegenverzahnung 8 des Abtriebselements 5 verschwenkt werden. Die Beaufschlagung des Stellantriebs 14 erfolgt jedoch erst dann, wenn das Abtriebselement 5 durch das Antriebsritzel 3 in die gewünschte Winkelstellung bewegt wurde, so dass der Verschleiß möglichst verringert wird.

Zwischen den beiden Führungsbolzen 13 ist ein Stellexzenter 16 angeordnet, der eine einfache Einstellung der maximalen Rückstellbewegung der Trägerplatte 2 bei der Deaktivierung des Stellantriebs 13 ermöglicht. Wie aus Figur 3 hervorgeht, enthält der Stellexzenter 16 einen auf der Grundplatte 10 befestigten Stift 17 und eine auf dem Stift 17 angeordnete Exzenterscheibe 18, die in ein entsprechendes Langloch 19 der Trägerplatte 2 eingreift. Durch entsprechende Drehung und Fixierung der Exzenterscheibe 18 in einer gewünschten Drehstellung kann so die Rückwärtsbewegung der Trägerplatte 2 entgegen der durch den Stellantrieb 14 vorgegebenen Bewegung begrenzt werden. Dadurch kann verhindert werden, dass die Verzahnung 7 des Antriebsritzels 3 nach der Deaktivierung des Stellantriebs 13 zu weit aus der Gegenverzahnung 8 des Abtriebselements 5 ausrückt und ein oder mehrere Zähne übersprungen werden.

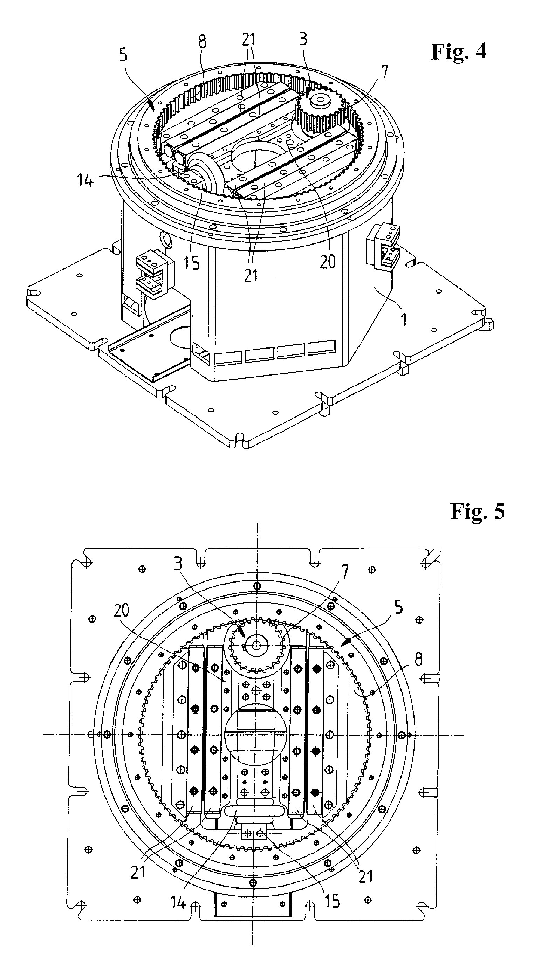

In den Figuren 4 und 5 ist ein weiteres Ausführungsbeispiel einer erfindungsgemäßen Antriebseinheit für einen Drehtisch gezeigt. Bei dieser Ausführung ist das Antriebsritzel 3 nicht auf einer schwenkbaren Trägerplatte, sondern auf einem linear verschiebbaren Träger 20 angebracht. Der Träger 20 ist innerhalb des als Drehkranz ausgeführten Abtriebselements 5 am Gehäuse 1 über Führungsschienen 21 verschiebbar geführt. Auch hier ist zwischen den Träger 20 und ein ortsfestes Widerlager 15 ein pneumatisch betätigter Balg als Stellantrieb 14 eingespannt. Durch Beaufschlagung des als Balg ausgebildeten Stellantriebs 14 mit Druckluft kann das Antriebsritzel 3 mit seiner Verzahnung 7 in die Gegenverzahnung 8 des Abtriebselements 5 eingedrückt und dadurch das Spiel minimiert werden.

Die Erfindung ist nicht auf die vorstehend ausführlich beschriebenen und in der Zeichnung dargestellten Ausführungsbeispiele beschränkt. So ist die Anstellung des Antriebsritzels gegen das Abtriebselement nicht nur bei Drehantrieben, sondern auch bei Linearantrieben einsetzbar, bei denen das Abtriebselement z.B. in Form einer Zahnstange ausgeführt ist.

## Patentansprüche

1. Antriebseinheit mit einem motorisch drehbaren Antriebsritzel (3) und einem um eine Mittelachse (6) drehbaren oder verschiebbaren Abtriebselement (5), wobei das Antriebsritzel (3) eine Verzahnung (7) zum Eingriff mit einer entsprechenden Gegenverzahnung (8) des Abtriebselements (5) enthält, **dadurch gekennzeichnet, dass** dem Antriebsritzel (3) ein pneumatisch, hydraulisch oder elektrisch ansteuerbares Stellelement (14) zugeordnet ist, durch welches das Antriebsritzel (3) gesteuert gegen das Abtriebselement (5) anstellbar ist.

2. Antriebseinheit nach Anspruch 1, **dadurch gekennzeichnet, dass** das Antriebsritzel (3) auf einer schwenkbar gelagerten und mittels des Stellelements (14) gegenüber dem Abtriebselement (5) schwenkbaren Trägerplatte (2) angeordnet ist.

3. Antriebseinheit nach Anspruch 2, **dadurch gekennzeichnet, dass** die Trägerplatte (2) um einen innerhalb eines Gehäuses (1) fest angeordneten Lagerbolzen (9) schwenkbar gelagert ist.

4. Antriebseinheit nach Anspruch 2 oder 3, **dadurch gekennzeichnet, dass** die Trägerplatte (2) durch zusätzliche Führungsbolzen (13) und Anlaufscheiben (12) gegen Abheben gesichert ist.

5. Antriebseinheit nach Anspruch 4, **dadurch gekennzeichnet, dass** die Führungsbolzen (13) gegenüber der Trägerplatte (2) ein seitliches Spiel aufweisen.

6. Antriebseinheit nach einem der Ansprüche 2 bis 5, **dadurch gekennzeichnet, dass** der Verschwenkbereich der Trägerplatte (2) durch einen Stellexzenter (16) einstellbar ist.

7. Antriebseinheit nach Anspruch 1, **dadurch gekennzeichnet, dass** das Antriebsritzel (3) auf einem gegenüber dem Abtriebselement (5) linear verschiebbaren Träger (20) angeordnet ist.

8. Antriebseinheit nach Anspruch 7, **dadurch gekennzeichnet, dass** der Träger (20) über Führungsschienen (21) an oder innerhalb eines Gehäuses (1) verschiebbar geführt ist.

9. Antriebseinheit nach einem der Ansprüche 1 bis 8, **dadurch gekennzeichnet, dass** das Abtriebselement (5) als Drehkranz oder Zahnstange ausgebildet ist.
